# EUROPÄISCHE PATENTSCHRIFT

(11) **EP 0 654 665 B1**
(45) Veröffentlichungstag und Bekanntmachung des Hinweises auf die Patenterteilung: **01.12.1999**
(21) Anmeldenummer: 94115936.0
(22) Anmeldetag: 10.10.1994
(51) Int. Cl.: G01N 27/90

(54) **Verfahren zur Prüfung von Schweissnähten mittels Wirbelstromverfahren**
Method for the examination of weld joints with eddy currents
Méthode pour l'examination des soudures par courants de Foucault

(30) Priorität: 22.11.1993 DE 4339720
(43) Veröffentlichungstag der Anmeldung: 24.05.1995
(73) Patentinhaber: ASEA BROWN BOVERI AG, 5400 Baden (CH)
(72) Erfinder: Ebeling, Wilhelm, Dr., CH-5032 Rohr (CH); Faber, Guy, CH-5452 Oberrohrdorf (CH); Kuhnen, Gottfried, CH-5452 Oberrohrdorf (CH); Scholz, Arthur, CH-5430 Wettingen (CH)

(56) Entgegenhaltungen:
- EP-A- 0 390 009
- WO-A-91/07656
- DATABASE WPI Week 9339, Derwent Publications Ltd., London, GB; AN 93310768 & SU-A-1 765 764 (INTRO RES TECH COOP)
- 'Dubbel/Taschenbuch für den Maschinenbau', 1986, W. BEITZ UND K.-H. KÜTTNER, BERLIN 15. Auflage * Seite 352 *

## Beschreibung

### Technisches Gebiet

Die Erfindung betrifft ein Verfahren zur Prüfung von Schweissnähten mittels Wirbelstromverfahren, welches insbesondere zur Fehlersuche bei Bauteilen, deren Schweissgut ein grobkörniges Gefüge aufweist, welches sich nicht durch eine Wärmebehandlung verfeinern lässt, eingesetzt werden kann.

### Stand der Technik

An Schweissnähte werden hinsichtlich Fehlerfreiheit sehr hohe Anforderungen gestellt. Mögliche Fehler sind Bindefehler (Flanken-, Wurzel- oder Lagebindefehler), Poren, Risse (in der Naht oder daneben), Schlackeneinschlüsse und Einbrandkerben.

Man schliesst deshalb üblicherweise an die Schweissung eine Vorprüfung an, bevor die Werkstücke spannungsarmgeglüht werden und die Schweissnaht einer Nachprüfung unterzogen wird.

Zur Beurteilung von Schweissverbindungen sind verschiedene Verfahren bekannt, beispielsweise die magnetische Streuflussprüfung, die radiographische Durchstrahlungsprüfung und das Impuls-Echo-Verfahren mittels Ultraschall.

Das Auffinden von inneren Fehlern, z.B. Rissen, mit Hilfe von Roentgen- oder Gammastrahlen bereitet in Schweissnähten dann Schwierigkeiten, wenn die Dicke der Schweissnaht sehr gross ist, denn es können nur Fehler nachgewiesen werden, deren Grösse mindestens 2 bis 3% der Werkstückdicke beträgt. Ist die Schweissnaht schwer zugänglich, scheidet ebenfalls die radiographische Methode aus. In diesen Fällen bleiben als Prüfmethoden die Ultraschallprüfung und die magnetische Streuflussprüfung, wobei letztere aber auf magnetisierbare Werkstoffe und auf den Oberflächenbereich der Prüfstücke beschränkt ist. Somit steht häufig nur die Ultraschallprüfung zur Diskussion.

Ein Problem bei der Ultraschallprüfung von Werkstücken und damit auch von Schweissnähten kann in der Korngrösse liegen. Ist die Wellenlänge des Ultraschalls sehr viel grösser als die Korngrösse, dann wird das Gefügekorn vom Schall gewissermassen übersehen. Ist die Korngrösse jedoch ca. 1/10 der Wellenlänge des Ultraschalls oder noch grösser, dann kann die auftretende Streuung des Schalls eine Prüfung der Schweissnaht unmöglich machen. Das trifft z.B. auf austenitische Schweissnähte zu.

Die Streuungserscheinungen verringern nämlich nicht nur die Höhe der Echos, sondern erzeugen auch viele kleinere Echos, die einen unregelmässigen Störuntergrund ergeben, aus dem sich die Echos der Fehlstellen nur undeutlich oder gar nicht abheben.

Eine Erhöhung der Ultraschalleistung (grössere Sendespannung) oder eine Signalverstärkung bringen hier keine Verbesserung, da der Störuntergrund in dem gleichen Masse wächst wie die interessierenden Echos. Wird als Alternative die Prüffrequenz herabgesetzt, also die Wellenlänge vergrössert, dann sind zwar Gefügezustände mit etwas grösserer Korngrösse mittels Ultraschall prüfbar, aber die Nachweisempfindlichkeit für kleine Fehlstellen sinkt.

Aus der Praxis ist bekannt, dass dickwandige WIG-geschweisste Rohre mittels optischer Verfahren durch Vergösserung und Abbildung der Schweissnaht auf einem Monitor auf das Auftreten von Heissrissen in der Schweissnaht und in der Wärmeeinflusszone untersucht werden. Die Nachteile dieses Verfahrens bestehen darin, dass nur die Risse nachgewiesen werden können, die bis zur Oberfläche reichen und dass die Kontrolle sehr zeitaufwendig und für den Prüfenden sehr ermüdend ist.

Eine weitere bekannte Methode zur Ermittlung von Gefügeinhomogenitäten ist die magnetinduktive Prüfung. Beim Einbringen eines metallischen Werkstückes in ein von einer Spule erzeugtes magnetisches Wechselfeld werden im Werkstoff Wirbelströme induziert, welche ihrerseits ein Magnetfeld erzeugen, das dem Spulenfeld entgegengerichtet ist. Befinden sich Risse, Poren oder andere Inhomogenitäten im Werkstoff, dann müssen die Wirbelströme diese Hindernisse umfliessen, so dass das sekundäre Magnetfeld und damit die Sekundärspannung beeinflusst werden. Bei langen Werkstücken, z.B. Rohren, arbeitet man mit dem Selbstvergleichsverfahren, bei dem aber bei durchgehenden Längsrissen weder die Risslänge noch die Risstiefe ermittelt werden können. Verwendet man zur Rissprüfung Tastspulen, so kann man zwar bei Einhaltung bestimmter Bedingungen die Risstiefe ermitteln, jedoch ist das Verfahren nur für den oberflächennahen Bereich von Werkstücken und damit nicht für dikke Werkstücke und dicke Schweissnähte geeignet.

Die o.g. Verfahren haben ausserdem den Nachteil, dass die Schweissnähte erst nach ihrer kompletten Fertigstellung geprüft werden können und somit erhebliche Durchlaufzeiten auftreten. Eine on-line Prüfung von grossvolumigen Schweissnähten mit enger Korrelation zur Fehlergrösse ist nicht bekannt.

### Darstellung der Erfindung

Die Erfindung versucht, all diese Nachteile zu vermeiden. Ihr liegt die Aufgabe zugrunde, ein Verfahren zur Prüfung von Schweissnähten mittels Wirbelstromverfahren zu entwickeln, welches zum Auffinden von Fehlern in grossen mehrlagigen Schweissnähten geeignet ist, deren Schweissgut ein grobkörniges Gefüge aufweist, welches sich nicht durch eine Wärmebehandlung verfeinern lässt, und wobei das Prüfverfahren wenig Zeit in Anspruch nimmt.

Erfindungsgemäss wird dies dadurch erreicht, dass bei der Prüfung grossvolumiger, aus mehreren Lagen aufgebauter und grobkörniger Schweissnähte diese on-line während ihres Aufbaus lagenweise geprüft werden.

Die Vorteile der Erfindung sind unter anderem darin zu sehen, dass aufgrund des geringen zu prüfenden Materialvolumens ein hohes Auflösungsvermögen erreicht wird und dadurch relativ kleine Fehler, z.B. kurze Risse, erkannt werden können und dass auch grobkörnige Materialien gut geprüft werden können. Beides erhöht die Fehlerauffindwahrscheinlichkeit im Vergleich zur üblicherweise angewendeten Ultraschallprüfung wesentlich.

Es ist besonders zweckmässig, wenn die Prüfung bereits bei erhöhten Werkstücktemperaturen oberhalb der Raumtemperatur, vorzugsweise bei Werkstücktemperaturen bis zu 350°C, durchgeführt wird, weil dann die Schweissnaht nicht auf Raumtemperatur abgekühlt werden muss. Dadurch wird die Durchlaufzeit verkürzt wird.

Das Verfahren wird mit Vorteil beim Verschweissen von austenitischen Grundwerkstoffen mit austenitischem Schweissdraht bzw. nur beim Schweissen mit austenitischem Schweissdraht angewendet, bei denen durch die Schweissung ein grobkörniges austenitisches Schweissgut entsteht.

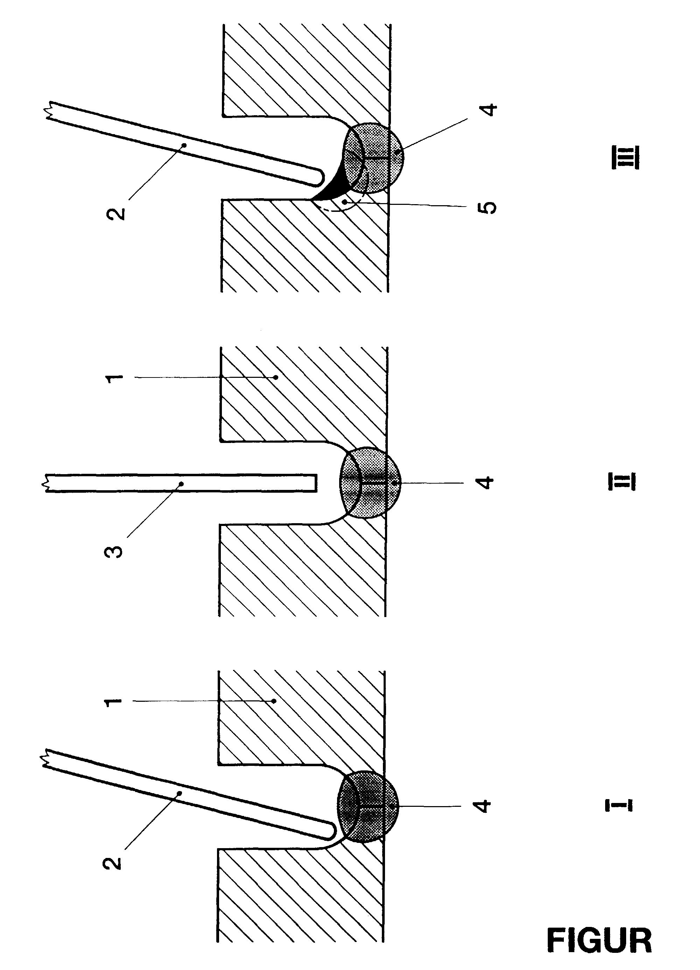

### Kurze Beschreibung der Zeichnung

In der Zeichnung ist ein Ausführungsbeispiel der Erfindung anhand der Schweissung eines Rotors für eine Turbine dargestellt.

Die einzige Figur stellt schematisch den erfindungsgemässen Verfahrensablauf dar.

Es sind nur die für das Verständnis der Erfindung wesentlichen Elemente gezeigt.

### Weg zur Ausfürung der Erfindung

Nachfolgend wird die Erfindung anhand eines Ausführungsbeispieles und der Figur näher erläutert.

Der Rotor 1 besteht in diesem Ausführungsbeispiel aus einem austenitischen Werkstoff, beispielsweise 17Cr14Ni3W Rest Fe. Er soll mit Hilfe eines austenitischen Schweissdrahtes 2, beispielsweise 16Cr12Ni1Mo Rest Fe, verschweisst werden. Wegen der Werkstückdicke muss eine mehrlagige und grossvolumige Schweissnaht angefertigt werden, wobei die Schweissnaht auf Grund des verwendeten Werkstoffes ein sehr grobkörniges und anisotropes Gefüge aufweist. Die Oberflächengeometrie der Schweissnaht ist wegen ihrer Mehrlagigkeit sehr uneben.

Eine Wärmebehandlung des Rotors 1 nach dem Schweissvorgang zwecks Beseitigung des Grobkornes und der Anisotropie ist nicht möglich.

Nachdem die erste Lage 4 geschweisst worden ist, wird diese erfindungsgemäss sofort einer on-line Prüfung mittels Wirbelstrom-Methode unterzogen. Dazu wird die Sonde 3 des Prüfgerätes zur Oberfläche der ersten Schweisslage 4 geführt, mit der Sonde 3 abgetastet und dabei einer an sich bekannten magnetinduktiven Prüfung unterzogen.

Da die Eindringtiefe in austenitischen Werkstoffen mehrere Millimeter beträgt und Rauscheffekte durch das Grobkorn wie bei der Ultraschall-Prüfung hier nicht auftreten, wird eine deutlich höhere Fehlerauffindwahrscheinlichkeit als bei einer Ultraschall-Prüfung nach der vollständigen Füllung der Schweissnute erreicht. Die Auffindwahrscheinlichkeit für rissartige Fehlstellen ist besonders hoch, wenn derartige Fehlstellen bis zur Oberfläche reichen.

Werden keine Fehler angezeigt, wird die Sonde 3 entfernt und sofort die zweite Lage 5 geschweisst und der ganze Vorgang wird wiederholt.

Auf diese Weise kann die Vorprüfung der gesamten Schweissnaht eingespart werden und die Durchlaufzeit zur Fertigstellung des Werkstückes, in diesem Falle des geschweissten Rotors 1, wird reduziert.

Desweiteren ist es möglich, das oben beschriebene Prüfverfahren auch anzuwenden, wenn die Temperatur des zu prüfenden Werkstoffvolumens erhöht ist. Die Schweisslage braucht also vor der Prüfung nicht auf Raumtemperatur abgekühlt zu sein, so dass auch auf diese Weise die Durchlaufzeit zusätzlich verkürzt wird.

### Bezugszeichenliste

- 1: Rotor
- 2: Schweissdraht
- 3: Sonde
- 4: erste Lage der Schweissnaht
- 5: zweite Lage der Schweissnaht

## Patentansprüche

1. Verfahren zur Prüfung von Schweissnähten mittels Wirbelstromverfahren, dadurch gekennzeichnet, dass bei der Prüfung grossvolumiger, aus mehreren Lagen aufgebauter und grobkörniger Schweissnähte diese on-line während ihres Aufbaus lagenweise geprüft werden.

2. Verfahren nach Anspruch 1, dadurch gekennzeichnet, dass die Wirbelstromprüfung bei bezüglich der Raumtemperatur erhöhten Werkstücktemperaturen durchgeführt wird.

3. Verfahren nach Anspruch 2, dadurch gekennzeichnet, dass die Werkstücktemperaturen bis zu 350°C betragen.

4. Verfahren nach Anspruch 1 oder 2, dadurch gekennzeichnet, dass das Verfahren angewendet wird bei austenischen Grundwerkstoffen und/oder austenitischem Schweissgut.

## Claims

1. Method of testing weld seams using an eddy-current technique, characterized in that, in the testing of large-volume and coarse-grained weld seams, which are built up from a plurality of layers, the latter are tested in layers on-line during their buildup.

2. Method according to Claim 1, characterized in that the eddy-current testing is performed at elevated workpiece temperatures.

3. Method according to Claim 2, characterized in that the workpiece temperatures are up to 350°C.

4. Method according to Claim 1 or 2, characterized in that the method is applied in the case of austenitic parent materials and/or austenitic weld metal.

## Revendications

1. Procédé pour le contrôle de cordons de soudure au moyen de procédés par courants de Foucault, caractérisé en ce que, lors du contrôle de cordons de soudure de grand volume, constitués de plusieurs passes et présentant une structure à gros grains, ceux-ci sont contrôlés en ligne passe par passe pendant leur réalisation.

2. Procédé suivant la revendication 1, caractérisé en ce que le contrôle par courants de Foucault est exécuté à des températures de pièce accrues par rapport à la température ambiante.

3. Procédé suivant la revendication 2, caractérisé en ce que les températures de pièce atteignent jusqu'à 350°C.

4. Procédé suivant la revendication 1 ou 2, caractérisé en ce que le procédé est appliqué avec des métaux de base austénitiques et/ou un métal d'apport austénitique.
